# EUROPÄISCHE PATENTSCHRIFT

(11) **EP 0 975 558 B1**
(45) Veröffentlichungstag und Bekanntmachung des Hinweises auf die Patenterteilung: **11.09.2002**
(21) Anmeldenummer: 98907893.6
(22) Anmeldetag: 18.02.1998
(51) Int. Cl.: C05F 17/02, B65G 25/06

(54) **AUSTRAGSVORRICHTUNG**
WITHDRAWAL DEVICE
INSTALLATION D'EVACUATION

(30) Priorität: 17.04.1997 DE 29706821 U; 09.06.1997 DE 29709975 U
(43) Veröffentlichungstag der Anmeldung: 02.02.2000
(73) Patentinhaber: HORSTMANN GmbH & CO. KG, 32545 Bad Oeynhausen (DE)
(72) Erfinder: BÜSCHENFELD, Siegfried, D-32584 Löhne (DE); SCHÜRMANN, Wilfried, D-32584 Löhne (DE)
(74) Vertreter: Jäger, Jörg
(86) Internationale Anmeldenummer: DE9800480
(87) Internationale Veröffentlichungsnummer: WO98047834

(56) Entgegenhaltungen:
- EP-A- 0 710 636
- WO-A-93/17986
- WO-A-94/26638
- DE-U- 9 308 069

## Beschreibung

Die Erfindung betrifft eine Austragsvorrichtung für auf Schubboden gelagerte Güter, insbesondere Schüttgüter, wie z.B. zu kompostierende Güter, mit den Merkmalen des Oberbegriffs des Schutzanspruches 1.

Bei bekannten Anlagen zur Lagerung von Schüttgütern wie z.B. zu kompostierende Güter, ist es bekannt, diese auf Schubböden, angeordnet in z.B. Tunneln zu lagern, d.h. den Kompostierungsvorgang vorzunehmen, um das kompostierte Material dann nach Kompostierung auszutragen, d.h. dem Tunnel zu entnehmen.

Dabei war es bekannt, das zu kompostierende Material z.B. auf einen netzartigen Untergrund zu lagern und bei einem entsprechendem Austrag das Netz in Gänze z.B. mittels einer, vor dem Tunnel anzuordnenden Antriebseinrichtung aufzurollen, d.h. aus dem Tunnel zu ziehen und damit auch das im Tunnel befindliche Kompostgut, um dieses dann über Transportbänder zu entfernen.

Darüber hinaus ist es aus der WO-A-93/17986 bekannt, eine Antriebseinheit vorzusehen, die ebenfalls verfahrbar vor den einzelnen Tunneln angeordnet und mit den Schubböden zu koppeln ist.

Diese bekannte Antriebseinrichtung weist im verfahrbaren Teil angeordnete Schubbodenplatten auf, die mit den Schubbodenplatten im Tunnel gekoppelt werden können und jeweils über einen eigenen Antrieb, angeordnet in der Antriebseinheit, verfügen.

Bei dieser bekannten Austragsvorrichtung besteht die Gefahr, daß zwischen den in der Antriebseinheit angeordneten und angetriebenen Schubbodenlatten auszutragendes Material hindurchfällt, so daß sich dieses Material im Bodenbereich ansammelt und die Verfahrbarkeit der Antriebseinheit nachhaltig beeinträchtigt und den Wartungs- und Reinigungsaufwand erhöht.

Der Erfindung liegt daher die Aufgabe zugrunde, eine Austragsvorrichtung für auf Schubboden gelagerte Güter, insbesondere Schüttgüter, wie z.B. zu kompostierende Güter zu schaffen, die sich zum einen durch einen einfachen konstruktiven Aufbau bei gleichzeitig hoher Betriebszuverlässigkeit auszeichnet und darüber hinaus gewährleistet, bei verschiedensten Schubböden zum Einsatz zu gelangen.

Diese Aufgabe wird bei einer Austragsvorrichtung für auf Schubboden gelagerte Güter, insbesondere Schüttgüter, wie z.B. zu kompostierende Güter, der eingangsgenannten Gattung mit den Merkmalen des kennzeichnenden Teiles des Schutzanspruches 1 gelöst. Weitere vorteilhafte Ausgestaltungen der Erfindung sind Gegenstand der Unteransprüche.

Dadurch, daß die Antriebseinheit wenigstens eine mit den Schubbodenplatten in wenigstens einer Kopplungsposition koppelbare und entkoppelbare Antriebseinrichtung aufweist, daß die Schubbodenplatten wenigstens teilweise mit wenigstens ihrem der Antriebseinheit zugewandten Ende in die und aus der Antriebseinheit verbringbar angeordnet sind und das die in die Antriebseinheit nach Einbringung hineinragenden Schubbodenplattenenden während einer Hin- und Herbewegung der Schubbodenplatten in Längsrichtung der die Antriebseinheit mit ihrem in die Antriebseinheit hineinragenden Ende nicht verlassend angeordnet sind, wird zum einen gewährleistet, daß verschiedene z.B. mit Schubböden versehene Tunnel in ein und derselben Antriebseinheit zum z.B. Austrag des im Tunnel befindlichen Schüttgutes bzw. auf dem Schubboden befindliche Güter gekoppelt werden können, d.h. die einzelnen Schubböden keine gesonderte Antriebseinheit aufweisen müssen. Darüber hinaus ist sichergestellt, daß das auszutragende Gut unmittelbar der Antriebseinheit und damit den vorgesehenen Transportbändern zugeführt wird, wobei die Geschwindigkeit des Austrags sowie die Austragsmenge entsprechend anzusteuern ist. Desweiteren wird sichergestellt, daß das auszutragende Schüttgut nicht in den Bereich des Fahrweges der Antriebseinheit gelangt, d.h. die Verfahrbarkeit der Antriebseinheit behindert. Es wird weiterhin gewährleistet, daß der Türbereich der einzelnen Tunnel bei Nichtkopplung durch Antriebs- und/oder Kopplungseinheit unbeeinträchtigt bleibt, d.h. in Gänze z.B. verschlossen werden kann.

Ist für jede Schubbodenplatte eine mit ihr zu koppelnde Antriebseinrichtung vorgesehen, so wird dadurch gewährleistet, daß der Austrag in optimaler Weise vorgenommen werden kann.

Sind Schubbodenplatte und Antriebseinrichtung an wenigstens zwei im Abstand zueinander angeordnete Kopplungspunkte koppelbar ausgestaltet, so ermöglicht dies, daß der Antriebseinheit zugewandte Ende der Schubbodenplatten in die Antriebseinheit zu verbringen, so daß gewährleistet ist, daß zwischen Antriebseinheit und Schubbodenende kein, wie auch immer geartetes, mit Hilfsmitteln zu überbrückender Abstand verbleibt, vielmehr bildet die Antriebseinheit und Schubboden eine Einheit.

Weist die Schubbodenplatte der Kopplung dienende Kopplungseinrichtungen auf, so wird dadurch, eine unmittelbare Kopplung von Schubbodenplatte und Antriebseinrichtung und damit Antriebseinheit gewährleistet, ohne daß hier eine manuelle Handhabung wie z.B. die Einführung eines Bolzen notwendig ist, der darüber hinaus eine nicht durchgängige Verbindung zwischen Schubbodenplatte und Antriebseinheit bzw. Austragseinheit schafft.

Ist die Kopplungseinrichtung eine Prismenaufnahme, so wird dadurch erreicht, daß eine störunanfällige und damit sichere Kopplungsmöglichkeit bereitgestellt wird.

Ist das Ende der Schubbodenplatte durch ein Kopplungsstück gebildet und liegen die Kopplungspunkte im Bereich des Kopplungsstückes, so ermöglicht dies auch eine Nachrüstung von bereits vorhandenen Schubbodensystemen sowie ein Ersatz bei auftretendem Verschleiß, ohne daß ganze Schubbodenplatten ersetzt werden müßten.

Ist die Antriebseinrichtung ein ansteuerbar ausgestalteter Hydraulikzylinder mit als Schub- oder Zugstange ausgebildete Kolbenstange und ist die Kolbenstange mit einem der Kopplung dienenden Prisma versehen, so wird dadurch eine individuelle Ansteuerung der einzelnen Schubbodenplatten bei Höchstmaß an Zuverlässigkeit und Störunanfälligkeit gewährleistet.

Weist die Antriebseinheit eine Fläche zur Aufnahme und Abstützung des Schüttgutes auf und ist eine Einrichtung zur Entfernung des Schüttgutes aus der Antriebseinheit vorgesehen, so wird dadurch gewährleistet, daß in die Antriebseinheit gelangendes Schüttgut diese nur auf dem vorbestimmten Weg verlassen kann, d.h. es besteht nicht die Gefahr, daß das Schüttgut durch vorhandene Fugen in den Bereich unterhalb der Antriebseinheit und sei es auch nur in geringen Mengen fällt.

Umfaßt die Einrichtung zur Entfernung des Schüttgutes zwei, Spaten aufweisende Spatenwellen sowie eine Schneckenwelle, so wird dadurch erreicht, daß der in die Antriebseinheit gelangende Kompost aufgelockert und homogenisiert wird, bevor er dem Transportband übergeben wird.

Ist das Ende einer jeden Schubbodenplatte bei Einnahme einer Position innerhalb der Antriebseinheit oberhalb der Abstützung angeordnet, wird dadurch erreicht, daß das Schüttgut stets in gewollter Art und Weise die Abstützung erreicht.

Sind wenigstens zwei jeweils in einem Tunnel angeordnete Schubböden vorgesehen und ist wenigstens eine wahlweise mit wenigstens einem Teil der vorhandenen Schubböden zu koppelnde Antriebseinheit vorgesehen, so wird dadurch sichergestellt, daß die Antriebseinheit in stets optimaler Art und Weise ausgelastet und damit wirtschaftlich arbeitend ausgelastet ist.

In der Zeichnung ist ein Ausführungsbeispiel der erfindungsgemäßen Austragsvorrichtung für auf Schubböden gelagerte Güter, insbesondere Schüttgüter, wie z.B. zu kompostierende Schüttgüter schematisch dargestellt, und zwar zeigt
- Fig.1: einen Ausschnitt in Draufsicht im Schnitt von nebeneinander angeordneten, jeweils ein Schubbodensystem aufweisender Tunnel, mit vor einem Tunnel angeordneter Antriebseinheit,
- Fig.2: die Antriebseinheit in Seitenansicht mit sich daran anschließendem Transportband,
- Fig.3: die Antriebseinheit in Seitenansicht angeordnet vor einem Tunnel mit Schubboden,
- Fig.4: eine schematische Vorderansicht der Antriebseinheit mit Spatenwellen,
- Fig.5: einen Tunnel mit Schubboden in Draufsicht,
- Fig.6: eine Detailzeichnung zweier nebeneinander angeordneter Tunnel in Vorderansicht mit dargestelltem Schubboden,
- Fig.7: eine Detailzeichnung des vorderen Endes zweier Schubbodenplatten mit jeweiligem Koppelstück,
- Fig.8: eine Detailzeichnung einer Schubbodenplatte mit Koppelstück in, mit einer Schub-/Zugstange der Antriebseinrichtung gekoppeltem Zustand in Seitenansicht,
- Fig.9: eine schematische Darstellung verschiedener Schub/Zugstangen-/Zylinderstellungen in Seitenansicht und

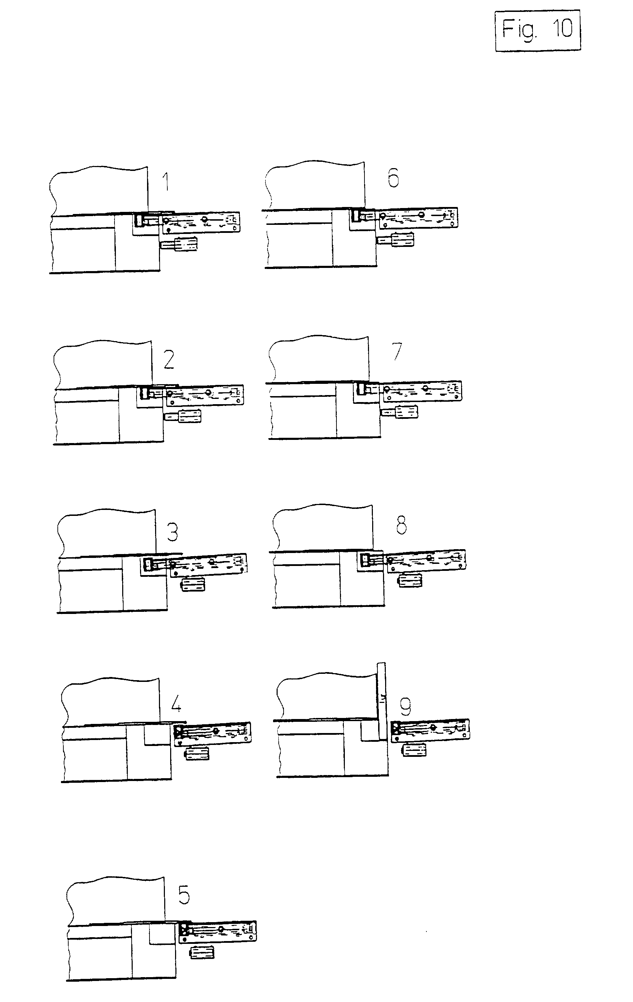

- Fig.10: eine weitere schematische Darstellung verschiedener Schub-/Zugstangen-/Zylinderstellungen in Seitenansicht.

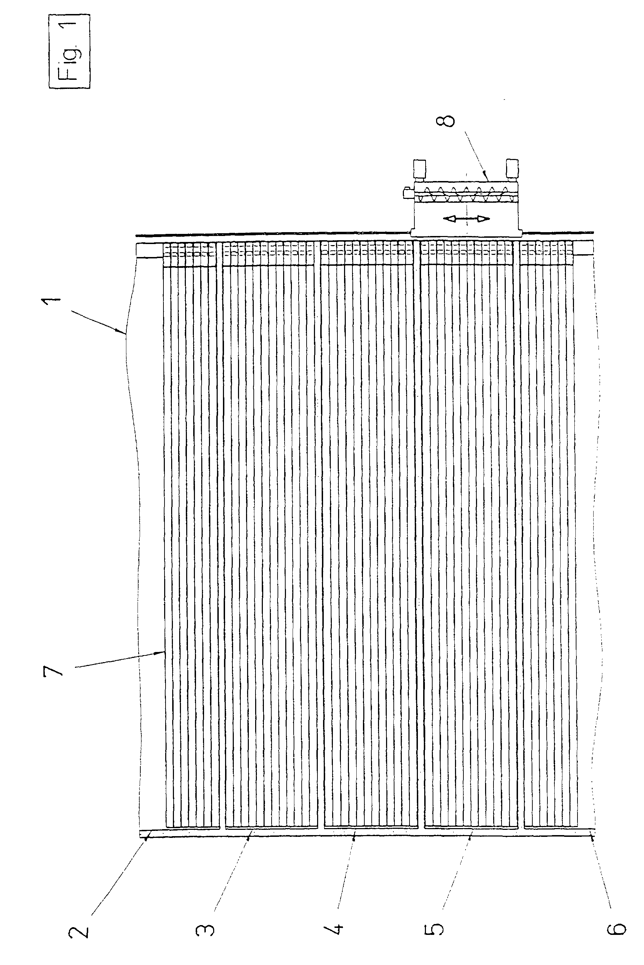

Wie der Fig.1 zu entnehmen, weist die im hier vorliegenden Ausführungsbeispiel dargestellte Kompostieranlage 1 nebeneinander angeordnete Tunnel 2,3,4,5,6 auf, die jeweils mit einem sogenannten Schubbodensystem, d.h. Schubboden 7, auf dem der zu kompostierende Abfall bzw. das zu kompostierende Schüttgut abgelagert wird, versehen sind.

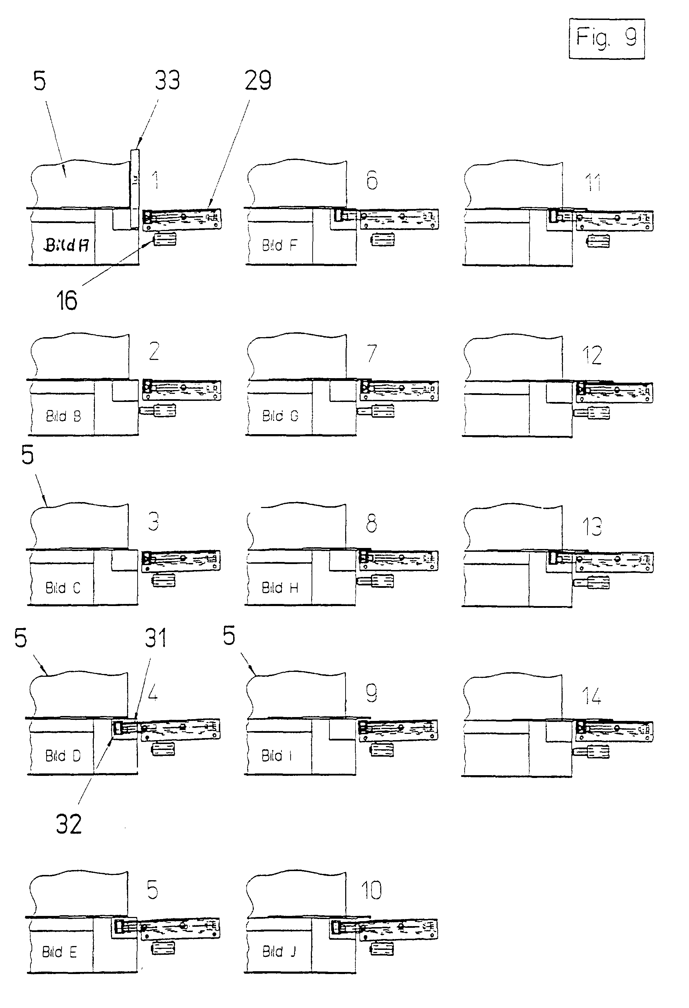

Die einzelnen Tunnel 2,3,4,5,6 sind an ihrer, in Blickrichtung Fig.1 rechten Seite verschließbar ausgestaltet, d.h. jeweils mittels eines in Fig.9a dargestellten Tores 33.

Desweiteren ist vor dem, in Blickrichtung Fig.1, zweiten Tunnel 5 von unten, eine Antriebseinheit 8 angeordnet, wobei diese Antriebseinheit 8 verfahrbar angeordnet ist, d.h. die Antriebseinheit 8 wird geführt mittels eines vor den Tunneln 2,3,4,5,6 befindlichen Führungssystems.

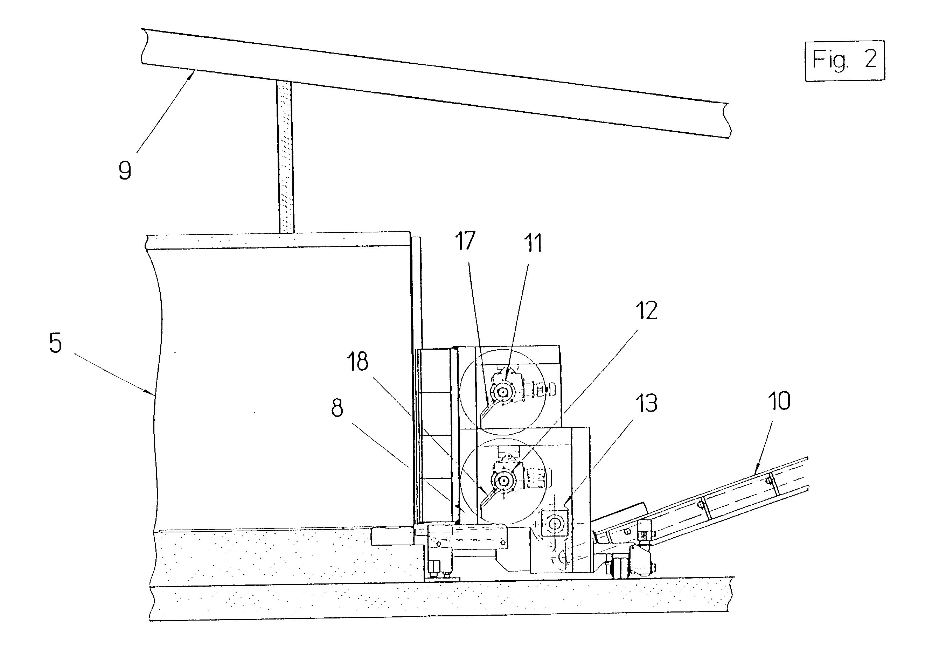

Wie der Fig.2 zu entnehmen, befindet sich die gesamte Kompostieranlage 1 im hier vorliegenden Ausführungsbeispiel weitgehend in einer geschlossenen Halle 9.

Wie der Fig.2 desweiteren zu entnehmen, ist der Antriebseinheit 8 im hier vorliegenden Ausführungsbeispiel ein aufsteigendes Förderband 10 zugeordnet, so daß der, aus dem Tunnel 5 auszutragende Kompost über die Antriebseinheit 8 mit darin vorgesehenen Spaten 17,18 aufweisende Spatenwellen 11,12 zu einer ebenfalls in der Antriebseinheit 8 angeordneten Schneckenwelle 13 transportiert wird, wobei das auszutragende Material mittels der, mit Spaten 17,18 bestückten Spatenwellen 11,12 aufgelockert und homogenisiert wird, um dann mittels der Schneckenwelle 13 an das aufsteigende Förderband 10 abgegeben und einer weiteren Bearbeitung oder einem weiteren Transport und damit Abtransport zugeführt zu werden.

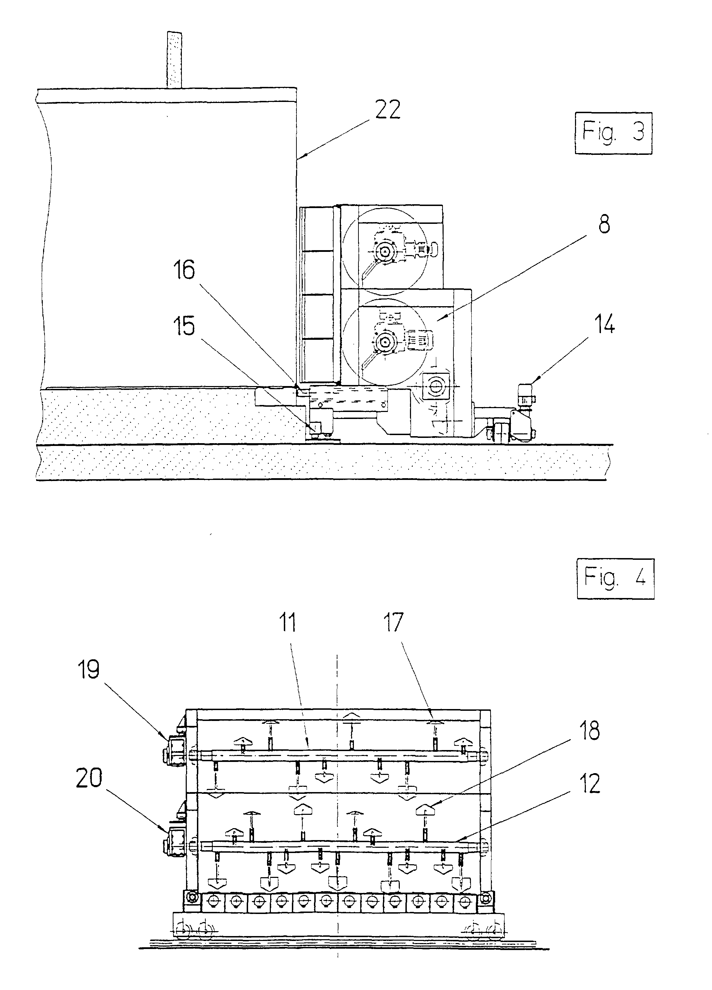

Wie der Fig.3 zu entnehmen, ist die Antriebseinheit 8 mittels eines Antriebes 14 verfahrbar vor den Tunnelöffnungen 22 angeordnet, wobei die Antriebseinheit 8 sowohl über vertikale als auch horizontal angeordnete Hydraulikzylinder 15,16 abgestützt werden kann.

In Fig.4 sind in einem Detail nochmals die Spatenwellen 11,12 mit den daran befindlichen Spaten 17,18 sowie dem jeweiligen Antrieb 19,20 dargestellt.

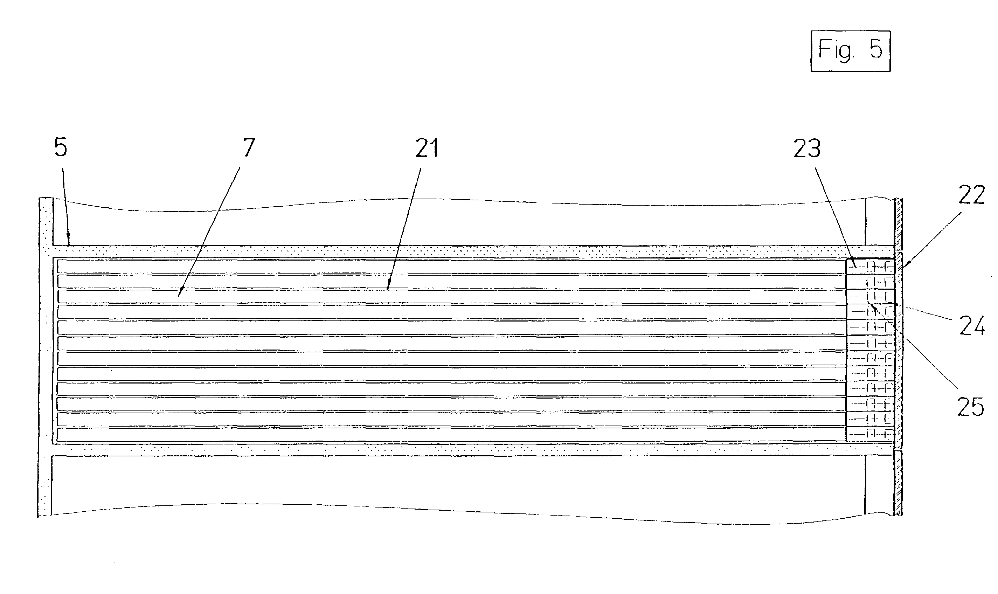

Fig.5 zeigt als Detail einen der in Fig.1 dargestellten Tunnel 2,3,4,5,6, hier den Tunnel 5, mit dem darin befindlichen Schubboden 7, der im hier vorliegenden Ausführungsbeispiel aus 12 Schubbodenplatten 21 besteht.

Die einzelnen Schubbodenplatten 21 sind, wie der Fig.5 zu entnehmen, parallel zueinander, auf Lücke angeordnet und weisen an ihren, der verschließbaren Öffnung 22 des Tunnels 5 sogenannte Koppelstücke 23 auf, die der Koppelung mit der jeweils zugeordneten Antriebseinrichtung 30,31,32, angeordnet in der Antriebseinheit 8 dienen.

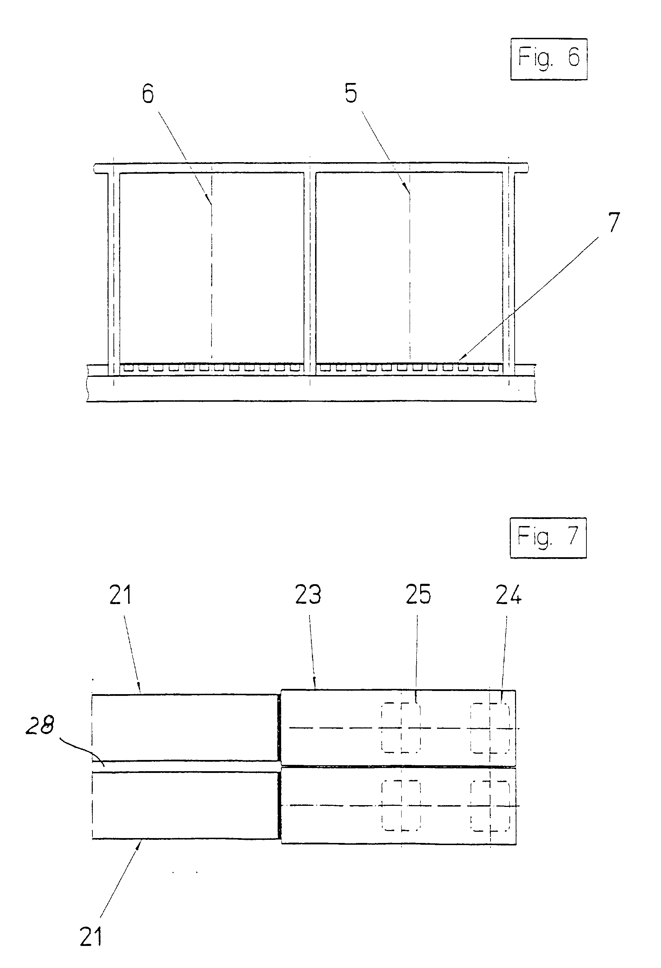

Dazu weist jedes Koppelstück 23, wie der Fig.5 und 7 zu entnehmen, zwei, auf einer Mittelachse, d.h. koaxial in einem Abstand zueinander angeordnete Prismenaufnahmen 24,25 auf.

Wie der Fig.6 zu entnehmen, dargestellt an jeweils einem Tunnelbeispiel zweier nebeneinander angeordneter Tunnel 5,6, weist jeder Tunnel 2,3,4,5,6 den in Fig.5 dargestellten Schubboden 7 auf.

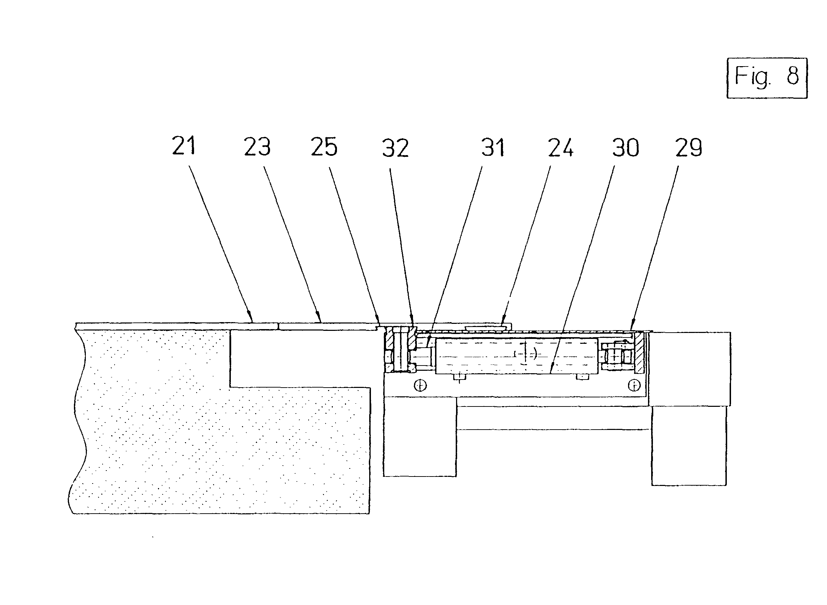

Fig.8 zeigt eine Koppelung von Antriebseinheit 8 und einer Schubbodenplatte 21.

Die Antriebseinheit 8 weist eine Schüttgutabstützung, d.h. einen Schüttgutboden 29 auf, der als geschlossene Fläche ausgebildet ist.

Dieser geschlossene Schüttgutboden 29 besteht, im hier vorliegendem Ausführungsbeispiel, aus einzelnen Plattensegmenten, die gesondert entfernt werden können.

Unter einer jeden dieser Segmente 29 befindet sich eine als Hydraulikzylinder 30 ausgestaltete Antriebseinrichtung, die dem Antrieb der einzelnen Schubbodenplatten 21, d.h. einer Verlagerung in Längsrichtung dient.

Bei dem hier vorliegenden Ausführungsbeispiel ist jeweils einer Schubbodenplatte 21 eine Antriebseinrichtung 30, d.h. ein entsprechender Hydraulikzylinder mit Hydraulikkolben 31 der im hier vorliegendem Ausführungsbeispiel als Schub-/Zugstange 31 ausgestaltet ist, zugeordnet. Die Anzahl der Antriebseinrichtungen 30 entspricht der Anzahl der Schubbodenplatten 21 des Schubbodens 7.

Es ist dabei denkbar, daß bei verschieden großen Schubböden 7 die Anzahl der Antriebseinrichtungen 30 der Anzahl der Schubbödenplatten 21 des größten Schubbodens 7 entspricht.

Wie der Fig.8 zu entnehmen und bereits dargelegt, befindet sich am, der Antriebseinheit 8 zugewandten Ende einer jeden der Schubbodenplatte 21 das zur Schubbodenplatte 21 gehörende Koppelstück 23.

Dieses Koppelstück 23 weist im hier vorliegenden Ausführungsbeispiel zwei Prismenaufnahmen 24,25 auf.

An der Schub-/Zugstange 31 befindet sich endständig ein der Koppelung mit der jeweiligen Schubbodenplatte 21 dienendes Prisma 32.

Im Einsatz wird die Antriebseinheit 8 zunächst einmal vor den zu entleerenden Tunnel 2,3,4,5,6 in unserem Ausführungsbeispiel vor den Tunnel 5 verfahren, wobei der im Tunnel 5 befindliche Kompost ausgetragen und an das Transportband 10 abgegeben werden soll.

Der Austragungsvorgang geschieht dabei nach Einrichten der Austragsvorrichtung 8,23 voll automatisch.

Zunächst einmal wird die Antriebseinheit 8 vor die Tunnelmitte gefahren, d.h. exakt positioniert, wobei alle Zylinder 30, d.h. Antriebseinrichtungen 30,31,32 während der Verfahrbewegung in Grundstellung, d.h. eingefahrener Stellung, d.h. zurückgefahrener Schub-/Zugstange 31 angeordnet sind.

Wie der Fig.9, Bild a, zu entnehmen, befindet sich im hier vorliegendem Ausführungsbeispiel der Schüttgutboden 29 nebst Antriebseinrichtung bzw. Hydraulikzylinder 30 und Schub-/Zugstange 31 sowie Prisma 32 in einer, in Richtung Tunnel 5 geneigten Position, wobei der Tunnel 5 durch die hier dargestellte Tür 33 verschlossen ist.

Es ist jedoch aus jedwede andere Bewegung zur Koppelung denkbar.

Nach entsprechender zuvor beschriebener Positionierung wird zunächst einmal die Tür 33 geöffnet, sodann werden die vertikalen Abstützzylinder 15 ausgefahren, so daß sich der Schüttgutboden 29 in einer waagerechten Position, dargestellt in Fig.9, Bild B, befindet.

Dann werden die horizontalen Abstützzylinder 16 ausgefahren und auf Betriebsdruck vorgespannt, so daß eine genaue Grundstellung eingenommen worden ist.

Nach entsprechender genauer Positionierung werden die Abstützzylinder 15,16 eingefahren, so daß entsprechend Fig.9, Bild C, sich die Antriebseinrichtung 30 nebst Schub-/Zugstange 31 und Schüttgutabstützung 29 in einer, in Richtung Tunnel 5 abfallenden Position befinden.

Die Schub-/Zugstange 31 mit Prisma 32 wird dann derart ausgefahren, daß sich das Prisma 32 unterhalb der in Fig.8 dargestellten rechten Prismaaufnahme 24 befindet.

Nach entsprechender Positionierung werden dann, dargestellt in Fig.9F, die vertikalen Abstützzylinder 15 ausgefahren, so daß das Prisma 32 in Wirkungseingriff mit der Prismenaufnahme 24 gelangt.

Die Schub-/Zugstange 31 wird nunmehr, dargestellt in Fig.9, Bild G, in die in Fig.8 dargestellte rückwärtige Position verfahren, so daß die gesamten Schubbodenplatten 21, zuvor in der beschriebenen Art und Weise mit jeweils einer Antriebseinrichtung 30 gekoppelt, in Richtung Antriebseinheit 8 verlagert werden, d.h. ein Stück weit in die Antriebseinheit 8 hineinragen.

Vor entsprechendem Einzug der Schub-/Zugstange 31 werden zunächst die horizontalen Abstützzylinder 16, dargestellt in Fig.9, Bild G, ausgefahren.

Nunmehr werden sowohl die horizontalen als auch vertikalen Abstützzylinder 15,16 dargestellt in Fig.9, Bild I, eingefahren, so daß die Antriebseinheit 8, insbesondere die Schüttgutabstützung 29 nebst Antriebseinrichtungen 30 und Schub-/Zugstange 31 in eine, in Richtung Tunnel 5 schräg verlaufende Position gelangen.

Entsprechend Fig.9, Bild J, wird die Schub-/Zugstange 31 nebst Prisma 32 sowie die vertikalen Abstützungen 31 erneut ausgefahren, so daß die Antriebseinheit 8, d.h. insbesondere der Hydraulikzylinder 30 nebst Schub-/Zugstange 31 und Prisma 32 mit der, in Fig.8 dargestellten, in Blickrichtung Fig.8 linken Prismenaufnahme 25 in Wirkungseingriff gelangen.

Nach Wirkungseingriff werden dann die horizontal wirkenden Abstützungen 16 ausgefahren und die Schub-/Zugstange 31 in die in Fig.8 dargestellte Position verbracht.

Nach Einnahme dieser Grundposition können dann die einzelnen Schubbodenplatten 21 durch hin- und herbewegen ihre Tätigkeit aufnehmen, d.h. der Komposteintrag in bekannter Art und Weise durch entsprechende Bewegung der Schubbodenplatten 21 aus dem Tunnel 5 entfernt werden, wobei der Austrag dazuführt, daß das auszutragende Material über die Schubböden 21 sowie das dazugehörige Koppelstück 23 auf die Abstützung 29 der Antriebseinheit 8 gelangt und von dort mittels der, im hier vorliegenden Ausführungsbeispiel vorhandenen, und bereits erwähnten, Spaten 17,18 aufweisenden Spatenwellen 11,12 zum Schneckenförderer 13 und dann im weiteren zum Transportband 10 verbracht wird.

Es werden z.B. drei Zylindergruppen gebildet.

Nachdem der Austragungsprozeß beendet ist, muß zunächst der Schubboden 7 wieder in Grundstellung gefahren werden. Dazu wird in umgekehrter Weise, wie zuvor beschrieben, verfahren.

Zum Ausklinken der Antriebseinheit müssen zunächst alle Schubplatten-Antriebszylinder 30 in Ausklinkstellung gebracht werden.

Dann fahren erst die Horizontal-Abstützzylinder 16 und danach die Vertikal-Abstützzylinder 15 ein, so daß sich das gesamte Gerät 8 im Übergangsbereich absenkt und sich dabei auf dem Führungssystem absetzt.

Beim Verfahren des Gerätes sind alle Abstütz- und Antriebszylinder 15,16,30 eingezogen, so daß die Führungsräder auf der Führungsschiene tragen und die Freigängigkeit gewährleistet ist.

Es wird darauf hingewiesen, daß die Anordnung der Schubböden im Tunnel nur beispielhaft erklärt wurde, d.h. denkbar ist die Anordnung der Schubböden auch in jeder anderen baulichen Gegebenheit, bishin zur Anordnung in LkW und damit auch die Ausgestaltung und der Einsatz der Austragsvorrichtung.

## Patentansprüche

1. Austragsvorrichtung für auf Schubboden gelagerte Güter, insbesondere Schüttgüter, wie z.B. zu kompostierende Güter, wobei der Schubboden in Längsrichtung wenigstens teilweise verlagerbare Schubbodenplatten aufweist, mit einer mit den Schubbodenplatten zu koppelnde verfahrbar angeordnete Antriebseinheit, die wenigstens eine mit wenigstens einem Teil der Schubbodenplatten (21) in wenigstens einer Kopplungsposition koppelbare und entkoppelbare Antriebseinrichtung (30,31,32) aufweist, **dadurch gekennzeichnet, daß** die Schubbodenplatten(21) mit ihrem der Antriebseinheit zugewandten Ende in die und aus der Antriebseinheit (8) verbringbar angeordnet sind, und daß die in die Antriebseinheit (8) nach Einbringung hineinragenden Schubbodenplattenenden, während einer Hin- und Herbewegung der Schubbodenplatten (21) in Längsrichtung die Antriebseinheit (8) mit ihrem in die Antriebseinheit (8) hineinragenden Ende diese nicht verlassend angeordnet sind.

2. Austragsvorrichtung nach Anspruch 1, **dadurch gekennzeichnet, daß** für jede Schubbodenplatte (21) eine mit ihr zu koppelnde Antriebseinrichtung (30,31,32) vorgesehen ist.

3. Austragsvorrichtung nach Anspruch 1 oder 2, **dadurch gekennzeichnet, daß** Schubbodenplatte (21) und Antriebseinrichtung (30,31,32) an wenigstens zwei im Abstand zueinander angeordnete Kopplungspunkte (24,25) koppelbar ausgestaltet sind.

4. Austragsvorrichtung nach einem der Ansprüche 1 bis 3, **dadurch gekennzeichnet, daß** die Schubbodenplatte (21) der Koppelung dienende Kopplungseinrichtungen (24,25) aufweist.

5. Austragsvorrichtung nach Anspruch 4, **dadurch gekennzeichnet, daß** die Kopplungseinrichtung eine Prismenaufnahme (24,25) ist.

6. Austragsvorrichtung nach einem der Ansprüche 1 bis 5, **dadurch gekennzeichnet, daß** das Ende der Schubbodenplatte (21) durch ein Kopplungsstück (23) gebildet ist, und daß die Kopplungspunkte (24,25) im Bereich des Kopplungsstückes (23) liegen.

7. Austragsvorrichtung nach einem der Ansprüche 1 bis 6, **dadurch gekennzeichnet**, das die Antriebseinrichtung ein ansteuerbar ausgestalteter Hydraulikzylinder (30) mit als Schub-/Zugstange ausgebildete Kolbenstange (31) ist.

8. Austragungsvorrichtung nach Anspruch 7, **dadurch gekennzeichnet, daß** die Kolbenstange (31) mit einem der Kopplung dienenden Prisma (32) versehen ist.

9. Austragsvorrichtung nach einem der Ansprüche 1 bis 8, **dadurch gekennzeichnet**, das die Antriebseinheit (8) eine Fläche (29) zur Aufnahme und Abstützung des Schüttgutes aufweist, und daß eine Einrichtung (11,12,17,18,19,20;13) zur Entfernung des Schüttgutes aus der Antriebseinheit (8) vorgesehen ist.

10. Austragsvorrichtung nach Anspruch 9, **dadurch gekennzeichnet, daß** die Einrichtung zur Entfernung des Schüttgutes zwei Spaten (17,18) aufweisende Spatenwellen (11,12) sowie eine Schneckenwelle (13) umfaßt.

11. Austragsvorrichtung nach einem der Ansprüche 1 bis 10, **dadurch gekennzeichnet, daß** das Ende einer jeden Schubbodenplatte (21) bei Einnahme einer Position innerhalb der Antriebseinheit (8) oberhalb der Abstützung (29) angeordnet ist.

12. Austragsvorrichtung nach einem der Ansprüche 1 bis 11, **dadurch gekennzeichnet, daß** wenigstens zwei jeweils in einem Tunnel (2,3,4,5,6) angeordnete Schubböden (7) vorgesehen sind und das wenigstens eine wahlweise mit wenigstens einem Teil der vorhandenen Schubböden (7) zu koppelnde Antriebseinheit (8) vorgesehen ist.

## Claims

1. A discharge device for goods carried on push trays, in particular bulk goods such as for example material for composting, whereby the push tray has push tray plates which can be transferred at least partially in a longitudinal direction, having a portably arranged drive unit to be coupled with the push tray plates, which has at least one drive mechanism (30, 31, 32) which can be coupled and uncoupled to and from at least one part of the push tray plates (21) in at least one coupling position, **characterised in that** the push tray plates (21) can be arranged with their end facing the drive unit able to be moved into and out of the drive unit (8), and **in that** the ends of the push tray plates projecting into the drive unit (8) after being introduced thereinto are arranged with their end projecting into the drive unit (8) not leaving the latter, during a backwards and forwards movement made by the push tray plates (21) in the longitudinal direction of the drive unit (8).

2. The discharge device as claimed in Claim 1, **characterised in that** a drive mechanism (30, 31, 32) is provided for each push tray plate (21) to be coupled thereto.

3. The discharge device as claimed in Claim 1 or 2, **characterised in that** push tray plate (21) and drive mechanism (30, 31, 32) are designed to be coupled to at least two coupling points (24, 25) arranged at a distance from one another.

4. The discharge device as claimed in any one of Claims 1 to 3, **characterised in that** the push tray plate (21) has coupling mechanisms (24, 25) serving as coupling.

5. The discharge device as claimed in Claim 4, **characterised in that** the coupling mechanism is a prism receptacle (24, 25).

6. The discharge device as claimed in any one of Claims 1 to 5, **characterised in that** the end of the push tray plate (21) is formed by a coupling piece (23), and **in that** the coupling points (24, 25) lie in the region of the coupling piece (23).

7. The discharge device as claimed in any one of Claims 1 to 6, **characterised in that** the drive mechanism is designed as a controllable hydraulic cylinder (30) with a piston rod (31) designed as a connecting rod /pull rod.

8. The discharge device as claimed in Claim 7, **characterised in that** the piston rod (31) is provided with a prism (32) acting as the coupling.

9. The discharge device as claimed in any one of Claims 1 to 8, **characterised in that** the drive unit (8) has a face (29) for receiving and supporting the bulk goods, and **in that** a device (11, 12, 17, 18, 19, 20; 13) is provided for removing the bulk goods from the drive unit (8).

10. The discharge device as claimed in Claim 9, **characterised in that** the device for removing the bulk goods comprises two spade shafts (11, 12) exhibiting spades (17, 18) as well as a worm shaft (13).

11. The discharge device as claimed in any one of Claims 1 to 10, **characterised in that** the end of each push tray plate (21) is arranged above the support (29) when a position is assumed inside the drive unit (8).

12. The discharge device as claimed in any one of Claims 1 to 11, **characterised in that** at least two push trays (7) arranged in a tunnel (2, 3, 4, 5, 6) in each case are provided and **in that** at least one drive unit (8) for coupling selectively to at least part of the available push trays (7) is provided.

## Revendications

1. Dispositif de décharge pour des marchandises déposées sur un fond de charriage, en particulier des marchandises en vrac, comme par exemple, des marchandises à composter, dans lequel le fond de charriage présente dans la direction longitudinale, au moins des plaques de fond de charriage partiellement déplaçables, avec une unité d'entraînement disposée de manière à pouvoir être translatée, à accoupler aux plaques de fond de charriage, laquelle présente au moins un mécanisme d'entraînement (30, 31, 32) pouvant être accouplé ou désaccouplé à au moins une partie des plaques de fond de charriage (21) dans au moins une position d'accouplement, **caractérisé en ce que** les plaques de fond de charriage (21) sont disposées de façon à pouvoir être amenées avec leur extrémité tournée vers l'unité d'entraînement dans et hors de l'unité d'entraînement (8), et **en ce que**, les extrémités de plaques de fond de charriage se projetant dans l'unité d'entraînement (8) après insertion sont disposées de sorte à ne pas quitter l'unité d'entraînement (8) dans la direction longitudinale avec leur extrémité qui se projette dans l'unité d'entraînement (8) pendant un mouvement de va-et-vient des plaques de fond de charriage (21).

2. Dispositif de décharge selon la revendication 1, **caractérisé en ce que** pour chaque plaque de fond de charriage (21), il est prévu un dispositif d'entraînement (30, 31, 32) à accoupler à celle-ci.

3. Dispositif de décharge selon la revendication 1 ou 2, **caractérisé en ce que** la plaque de fond de charriage (21) et un dispositif d'entraînement (30, 31, 32) sont conçus de façon à pouvoir être accouplés au moins au niveau de deux points d'accouplement (24, 25) disposés à une certaine distance l'un de l'autre.

4. Dispositif de décharge selon l'une quelconque des revendications 1 à 3, **caractérisé en ce que** la plaque de fond de charriage (21) présente des dispositifs d'accouplement (24, 25) servant à l'accouplement.

5. Dispositif de décharge selon la revendication 4, **caractérisé en ce que** le dispositif d'accouplement est un réceptacle à prisme (24, 25).

6. Dispositif de décharge selon l'une quelconque des revendications 1 à 5, **caractérisé en ce que** l'extrémité de la plaque de fond de charriage (21) est formée par une pièce d'accouplement (23) et que les points d'accouplement (24, 25) se trouvent dans la zone de la pièce d'accouplement (23).

7. Dispositif de décharge selon l'une quelconque des revendications 1 à 6, **caractérisé en ce que** le dispositif d'entraînement est un cylindre hydraulique (30) conçu en vue d'être commandé, avec une tige de piston (31) formée en tant que tige de poussée/traction.

8. Dispositif de décharge selon la revendication 7, **caractérisé en ce que** la tige de piston (31) est munie d'un prisme (32) servant à l'accouplement.

9. Dispositif de décharge selon l'une quelconque des revendications 1 à 8, **caractérisé en ce que** l'unité d'entraînement (8) présente une surface (29) pour recevoir et soutenir la marchandise en vrac, et **en ce qu'**un dispositif (11, 12, 17, 18, 19, 20; 13) est prévu pour retirer la marchandise en vrac de l'unité d'entraînement (8).

10. Dispositif de décharge selon la revendication 9, **caractérisé en ce que** le dispositif pour retirer la marchandise en vrac comprend des arbres de pelle (11, 12) présentant deux pelles (17, 18) ainsi qu'un arbre de vis sans fin (13).

11. Dispositif de décharge selon l'une quelconque des revendications 1 à 10, **caractérisé en ce que** l'extrémité de chacune des plaques de fond de charriage (21) est disposée au-dessus du support (29) lors de l'insertion dans une position à l'intérieur de l'unité d'entraînement (8).

12. Dispositif de décharge selon l'une quelconque des revendications 1 à 11, **caractérisé en ce qu'**il est prévu au moins deux fonds de charriage (7) disposés à chaque fois dans un tunnel (2, 3, 4, 5, 6) et qu'il est prévu ledit au moins une unité d'entraînement (8) à coupler éventuellement avec au moins une partie des fonds de charriage disponibles (7).
